# FASCICULE DE BREVET EUROPEEN

(11) **EP 1 868 844 B1**
(45) Date de publication et mention de la délivrance du brevet: **10.09.2008**
(21) Numéro de dépôt: 06726336.8
(22) Date de dépôt: 11.04.2006
(51) Int. Cl.: B60P 3/42, B62D 47/00

(54) **VEHICULE AUTOMOBILE DE TYPE BERLINE TRANSFORMABLE**
UMWANDELBARES LIMOUSINENARTIGES KRAFTFAHRZEUG
TRANSFORMABLE SEDAN-STYLE MOTOR VEHICLE

(30) Priorité: 14.04.2005 FR 0503744
(43) Date de publication de la demande: 26.12.2007
(73) Titulaire: PEUGEOT CITROËN AUTOMOBILES S.A., 78140 Vélizy Villacoublay (FR)
(72) Inventeur: RAMES, Christian, F-78700 Conflans Sainte Honorine (FR)
(86) Numéro de dépôt international: PCT/FR2006/050330
(87) Numéro de publication internationale: WO 2006/108994

(56) Documents cités:
- FR-A- 2 847 863
- US-A- 5 961 173
- US-B1- 6 851 741

## Description

La présente invention concerne un véhicule automobile de type berline transformable en un véhicule automobile de type à benne ouverte vers le haut, appelé pick-up. Un example de cette technique antérieure est divulgué par le document FR 2.847863

Les véhicules automobiles de type berline comportent, de manière classique, un habitacle contenant une rangée de sièges avant et une rangée de sièges arrière et un coffre délimité par un couvercle déplaçable entre une position de fermeture et une position d'ouverture et par une paroi arrière fixe. L'habitacle est séparé du coffre par une cloison.

Généralement, dans ce type de véhicule automobile, la rangée de sièges arrière est escamotable et la cloison de séparation est basculable entre une position sensiblement verticale de séparation de l'habitacle du coffre et une position sensiblement horizontale mettant en communication l'habitacle et le coffre afin d'augmenter longitudinalement le volume de chargement de ce coffre.

Mais, avec ce genre de véhicule, la capacité de chargement du coffre est limitée en hauteur par le couvercle.

On connaît également des véhicules automobiles à benne ouverte vers le haut, appelés pick-up, qui comportent à l'arrière d'une cabine constituée par la partie antérieure du véhicule, renfermant le poste de conduite, la benne ouverte vers le haut de forme généralement parallélépipédique.

La benne ouverte de ce type de véhicules comporte un plancher, deux parois latérales dans la direction longitudinale du véhicule et une paroi à l'extrémité arrière ouvrante, située à l'opposé de la cabine. De tels véhicules présentent des avantages en ce qui concerne leur capacité de chargement par rapport à un véhicule de type berline ou même par rapport à un véhicule de type monocorps ou break, puisque le niveau de chargement de la benne est pratiquement illimité du fait de l'absence d'un toit recouvrant ladite benne.

Le principal inconvénient de ce type de véhicules réside dans le fait qu'il ne peut être utilisé qu'à des fins utilitaires et seulement par le conducteur et éventuellement un passager, ce qui limite leur intérêt dans le cas de leur utilisation par des particuliers.

L'invention a pour but de proposer un véhicule automobile de type berline transformable qui permet de bénéficier des avantages de ce type de véhicule et également des avantages d'un véhicule automobile de type à benne ouverte vers le haut, sans en avoir les inconvénients.

L'invention a donc pour objet un véhicule automobile de type berline transformable en un véhicule automobile de type à benne ouverte vers le haut, appelé pick-up, et comportant, d'une part, un habitacle contenant une rangée de sièges avant et une rangée de sièges arrière et, d'autre part, un coffre délimité par un couvercle, une paroi d'extrémité et une cloison transversale de séparation entre l'habitacle et le coffre et surmontée par une lunette arrière, caractérisé en ce que le couvercle est formé par deux demi-panneaux de coffre, un panneau avant monté articulé sur le bord supérieur de la cloison de séparation et un panneau arrière monté articulé sur le panneau avant.

Selon d'autres caractéristiques de l'invention :
- le panneau arrière du couvercle est déplaçable par basculement entre une première position prolongeant le panneau avant et une seconde position rabattue sur le panneau avant, et
- dans la seconde position du panneau arrière du couvercle, les deux panneaux rabattus l'un sur l'autre sont déplaçables par basculement contre la lunette arrière pour libérer la partie supérieure du coffre.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en coupe longitudinale de la partie arrière d'un véhicule automobile selon l'invention, dans la configuration de type berline,
- la Fig. 2 est une vue schématique en coupe longitudinale de la partie arrière du véhicule automobile dans la position intermédiaire de repliage du couvercle de coffre du véhicule automobile, et
- la Fig. 3 est une vue schématique en coupe longitudinale de la partie arrière du véhicule automobile dans la configuration de type à benne ouverte vers le haut de ce véhicule.

La partie arrière de ce véhicule automobile représentée schématiquement sur les figures correspond à celle d'un véhicule de type berline transformable, désigné par la référence générale 1 et qui comporte, de manière classique, une carrosserie formant, entre autres, un habitacle 2 et un coffre 3.

L'habitacle 2 contient une rangée de sièges avant 4 et une rangée de sièges arrière 5 qui, de préférence, est déplaçable entre une position d'utilisation et une position escamotée dans un plancher 6.

Le coffre 3 est délimité par une cloison transversale 10 de séparation entre l'habitacle 2 et ledit coffre 3, une paroi d'extrémité arrière 11 ainsi que par deux parois latérales 12 qui se prolongent jusqu'à ladite paroi d'extrémité arrière 11. Ce coffre 3 est également délimité, à sa partie inférieure, par un plancher 13 et, à sa partie supérieure, par un couvercle 20 qui s'étend entre le bord supérieur 10a de la cloison transversale 10 et le bord supérieur 11a de la paroi d'extrémité 11.

La cloison transversale 10 est surmontée par une lunette arrière 14 qui s'étend jusqu'au bord arrière 7a d'un pavillon 7.

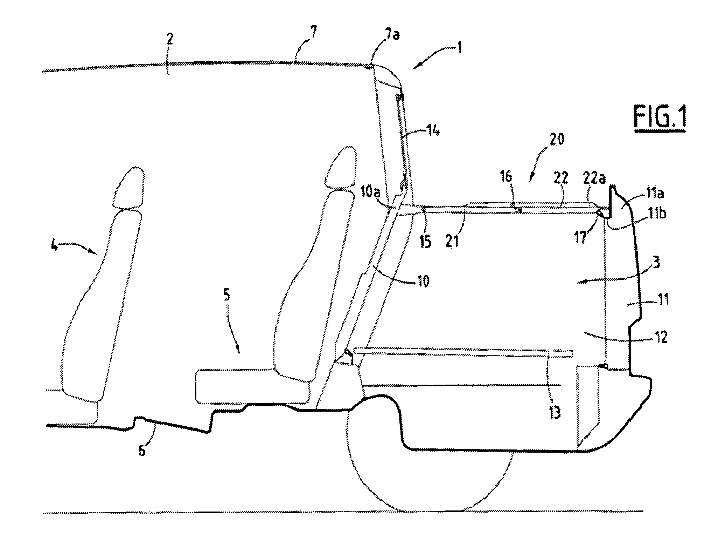

Ainsi que montré à la Fig. 1, le couvercle 20 se compose de deux demi-panneaux de coffre, un panneau avant 21 et un panneau arrière 22. Le panneau avant 21 est monté articulé sur le bord supérieur 10a de la cloison transversale 10, au moyen d'un axe transversal 15 et la panneau arrière 22 est monté articulé sur le panneau avant 21, au moyen d'un axe transversal 16.

Dans la position d'obturation de la partie supérieure du coffre 3, les deux panneaux, respectivement avant 21 et arrière 22 du couvercle 20, sont placés dans le prolongement l'un de l'autre, ainsi que montré à la Fig. 1.

Dans cette configuration, le bord arrière 22a du panneau arrière 22 est en appui sur un rebord 11 b ménagé dans la paroi d'extrémité 11 et ce rebord 11 b est pourvu d'un joint d'étanchéité 17 assurant l'étanchéité entre le panneau arrière 22 et la paroi d'extrémité 11. De même, les bords latéraux des deux panneaux 21 et 22 sont en appui sur un rebord, non représenté, ménagé dans chaque paroi latérale 12 et un joint d'étanchéité, non représenté, est disposé entre ces bords latéraux des panneaux 21 et 22 et la paroi latérale 12 correspondante.

Le panneau arrière 22 du couvercle 20 peut être équipé d'un élément de verrouillage de type classique, comme par exemple une serrure, non représentée, pour maintenir le couvercle 20 dans la position de fermeture du coffre 3.

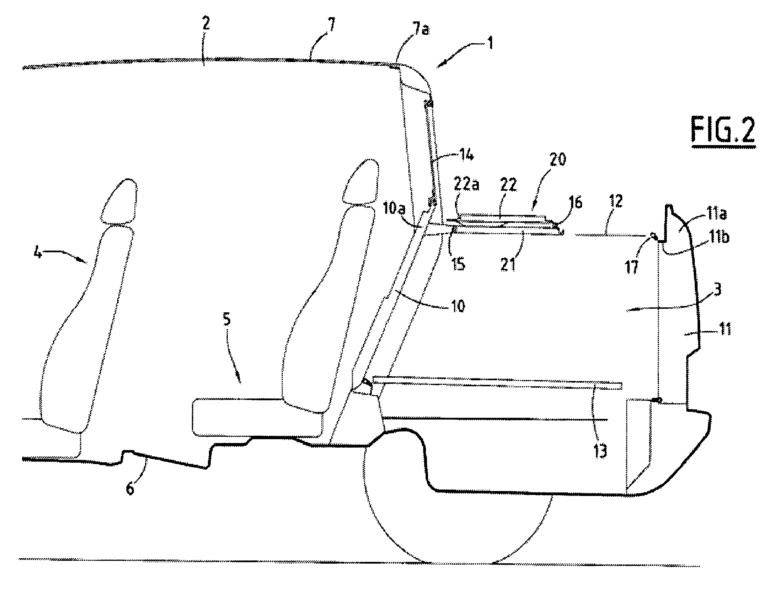

Pour ouvrir la partie supérieure du coffre 3 et permettre ainsi le transport d'objets volumineux, il suffit à un utilisateur, dans un premier temps, de déplacer par basculement autour de l'axe d'articulation 16, le panneau arrière 22 entre une première position prolongeant le panneau avant 21 et une seconde position rabattue sur ce panneau avant 21, ainsi que représenté à la Fig. 2.

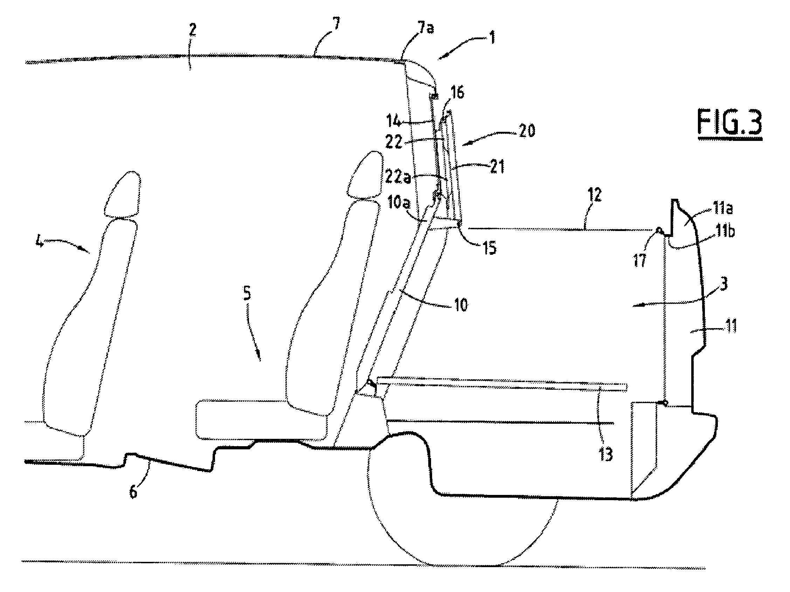

Ensuite, dans un second temps, l'utilisateur déplace par basculement autour de l'axe d'articulation 15, les deux panneaux 21 et 22 rabattus l'un sur l'autre en direction de la lunette arrière 14 afin de libérer complètement la partie supérieure du coffre 3, ainsi que montré à la Fig. 3.

Les deux panneaux 21 et 22 sont maintenus dans la position relevée par un élément approprié de type connu, non représenté.

Ces panneaux 21 et 22 peuvent, par exemple être maintenus par des moyens de verrouillage situés sur l'axe d'articulation 15 et/ou sur le bord arrière 7a du pavillon 7.

La paroi d'extrémité 11 peut également être basculable vers l'extérieur ce qui permet d'augmenter longitudinalement le volume de chargement du coffre 3 du véhicule automobile.

Le véhicule automobile selon l'invention permet de passer facilement d'une configuration à l'autre de telle sorte que ce véhicule puisse servir simultanément au transport de passagers dans un habitacle entièrement fermé et ainsi qu'au transport de charges dans une benne ouverte vers le haut et facilement accessible par l'arrière.

Le véhicule automobile selon l'invention est particulièrement économique du fait de sa polyvalence et il permet de transporter des passagers dans de bonnes conditions de confort et de protection climatique, et d'effectuer des transports de charges volumineuses.

## Revendications

1. Véhicule automobile de type berline transformable en un véhicule automobile de type à benne ouverte vers le haut, appelé pick-up, et comportant , d'une part, un habitacle (2) contenant une rangée de sièges avant (4) et une rangée de sièges arrière (5) et, d'autre part, un coffre (3) délimité par un couvercle (20), une paroi d'extrémité (11) et une cloison transversale (10) de séparation entre l'habitacle (2) et le coffre (3) et surmontée par une lunette arrière (14), **caractérisé en ce que** le couvercle (10) est formé par deux demi-panneaux de coffre, un panneau avant (21) monté articulé sur le bord supérieur (10a) de la cloison de séparation (10) et un panneau arrière (22) monté articulé sur le panneau avant (21).

2. Véhicule automobile selon la revendication 1, **caractérisé en ce que** le panneau arrière (22) est déplaçable par basculement entre une première position prolongeant le panneau avant (21) et une seconde position rabattue sur ledit panneau avant (21).

3. Véhicule automobile selon la revendication 2, **caractérisé en ce que**, dans la seconde position du panneau arrière (22), les deux panneaux (21, 22) rabattus l'un sur l'autre sont déplaçables par basculement contre la lunette arrière (14) pour libérer la partie supérieure du coffre (3).

## Claims

1. Saloon-style motor vehicle transformable into a motor vehicle with an open-top cargo box, known as a pick-up, and comprising, on the one hand, a passenger compartment (2) containing a front row of seats (4) and a rear row of seats (5), and, on the other hand, a boot (3) bounded by a lid (20), an end wall (11) and a transverse partition (10) separating the passenger compartment (2) from the boot (3) and surmounted by a rear window (14), said vehicle being **characterized in that** the lid (10) is formed by two boot half-panels, a front panel (21) hinged to the upper edge (10a) of the dividing partition (10) and a rear panel (22) hinged to the front panel (21).

2. Motor vehicle according to Claim 1, **characterized in that** the rear panel (22) can be moved by pivoting it between a first position in which it forms an extension of the front panel (21) and a second position in which it is folded onto said front panel (21).

3. Motor vehicle according to Claim 2, **characterized in that**, in the second position of the rear panel (22), the two panels (21, 22) folded onto each other can be moved by pivoting them against the rear window (14) to expose the top of the boot (3).

## Patentansprüche

1. Limousinenartiges Kraftfahrzeug, das in ein Kraftfahrzeug des Typs mit nach oben offenem Aufbau, Pickup genannt, umgewandelt werden kann, und das einerseits einen Fahrgastraum (2) aufweist, der eine Reihe vorderer (4) und eine Reihe hinterer Sitze (5) aufweist, und andererseits einen Kofferraum (3), der von einem Deckel (20) abgedeckt ist, eine Endwand (11) und eine Querwand (10) zum Trennen des Fahrgastraums (2) und des Kofferraums (3), und worüber eine Heckscheibe (14) liegt, **dadurch gekennzeichnet, dass** der Deckel (10) aus zwei Kofferraum-Halbtafeln ausgebildet ist, einer vorderen Tafel (21), die auf dem oberen Rand (10a) der Trennwand (10) angelenkt installiert ist, und einer hinteren Tafel (22), die auf der vorderen Tafel (21) angelenkt installiert ist.

2. Kraftfahrzeug nach Anspruch 1, **dadurch gekennzeichnet, dass** die hintere Tafel (22) durch Schwenken zwischen einer ersten Position, die die vordere Tafel (21) verlängert, und einer zweiten, auf die vordere Tafel (21) heruntergeklappten Position beweglich ist.

3. Kraftfahrzeug nach Anspruch 2, **dadurch gekennzeichnet, dass** die zwei Tafeln (21, 22), die aufeinander heruntergeklappt sind, in der zweiten Position der hinteren Tafel (22) durch Schwenken gegen die Heckscheibe (14) beweglich sind, um den oberen Teil des Kofferraums (3) freizugeben.
